# EUROPEAN PATENT SPECIFICATION

(11) **EP 0 789 060 B1**
(45) Date of publication and mention of the grant of the patent: **31.07.2002**
(21) Application number: 95914511.1
(22) Date of filing: 05.04.1995
(51) Int. Cl.: C08L 79/00, C08L 9/00, C08L 11/00, C08L 13/00, C09K 3/10, C08G 73/00, C08J 5/04, C08K 3/00, C08K 7/02, C08K 7/04, C08K 13/04, C08J 5/24

(54) **GASKET FOR COMPRESSOR OF REFRIGERATOR OR THE LIKE**
DICHTUNG FÜR EINEN KÜHLGERÄTKOMPRESSOR ODER DERGLEICHEN
JOINT D'ETANCHEITE POUR UN COMPRESSEUR D'UN REFRIGERATEUR OU SIMILAIRE

(43) Date of publication of application: 13.08.1997
(73) Proprietor: NISSHINBO INDUSTRIES, INC., Chuo-ku, Tokyo 103 (JP)
(72) Inventor: AMANO, Satoshi Nisshinbo Industries, Inc., Adachi-ku Tokyo 123 (JP); ITO, Takahiko Nisshinbo Industries, Inc., Adachi-ku Tokyo 123 (JP)
(74) Representative: Laufhütte, Dieter, Dr.-Ing.
(86) International application number: JP9500655
(87) International publication number: WO9631569

(56) References cited:
- JP-A- 2 175 757
- JP-A- 3 292 331
- JP-A- 4 175 366
- JP-A- 5 186 615
- JP-A- 5 320 611
- JP-A- 52 123 484
- JP-A- 61 066 724
- JP-A- 61 246 245

## Description

### Technical Field

The present invention relates to a gasket for a compressor, especially for a compressor of a refrigerating machine. More particularly, the present invention relates to a gasket (e. g. a cylinder head gasket or a muffler gasket) for a compressor, especially for a compressor of a refrigerating machine, which gasket is used for keeping the airtightness of each compressor section particularly in said compressor in which a fluorocarbon refrigerant (HFC) and a refrigerating machine oil selected from synthetic lubricating oils of the polyalkylene glycol type (PAG type), the ester-modified PAG type in which at least one terminal of polyalkylene glycol has been modified by esterification and the ester type are used, and which gasket uses no asbestos fiber and yet exhibits an excellent strength, sealing properties and resistance to the above refrigerant and refrigerating machine oil.

### Background Art

In the refrigerating cycle in a car air-conditioner, a refrigerator, an air-conditioner or the like, dichlorodifluoromethane (CF₂Cl₂), which has no polar group, has heretofore been mainly used as the refrigerant, and hence, a mineral oil or the like has been mainly used as the refrigerating machine oil. However, because of recent problems of the environmental pollution of the earth, it has become impossible to use the above-mentioned dichlorodifluoromethane, which contains chlorine atoms, and only chlorine atom-free fluorocarbon refrigerants (HFC), a representative of which is 1,1,1,2-tetrafluoroethane (HFC134a), are now becoming usable in place of the dichlorodifluoromethane.

However, the above-mentioned chlorine atom-free fluorocarbon refrigerant, a representative of which is 1,1,1,2-tetrafluoroethane, has a polar group, and hence, is poor in compatibility with mineral oils, etc. When the chlorine atom-free fluorocarbon refrigerant is used in the refrigerating cycle, it is impossible to use a conventional mineral oil as the refrigerating machine oil in a compressor.

Therefore, in order to solve this problem, it has been proposed to use, as the refrigerating machine oil, synthetic lubricating oils of the PAG type, the ester-modified PAG type or the ester type, which have a polar group in the constitutive molecule.

On the other hand, in the gasket used for a compressor of a refrigerating machine or the like, asbestos has been used as the fibrous basic material; a rubber material, a representative of which is acrylonitrile-butadiene rubber (NBR), chloroprene rubber (CR) or the like, has been used as a bonding material; and a vulcanizing agent for vulcanizing the rubber material and further a filler have been used for imparting thereto sealing properties, a strength and resistance to the refrigerant and refrigerating machine oil. However, the adverse effect of the asbestos on human bodies has recently been pointed out and the procurement and handling thereof have become difficult and the use of asbestos is becoming impossible.

Therefore, research on the production of an asbestos sheet substitute using another fibrous basic material substitutable for the asbestos has been extensively made. For example, as a substitute for asbestos, there has been proposed the use of inorganic fiber such as glass fiber, rock wool, ceramic fiber, carbon fiber or the like; and an organic fiber and pulp such as those of aramid, polyester, phenolic resin, cellulose or the like, and a sheet obtained by subjecting to sheet-formation the above fiber together with a rubber material as a binding material, a filler and a vulcanizing agent for the rubber material, attracts now attention as a non-asbestos sheet.

However, the above-mentioned fluorocarbon refrigerant has a polarity unlike dichlorodifluoromethane which has heretofore been used, and hence, has a corrosive action on organic materials, particularly a high ability to dissolve organic materials. Among them, typical HFC134a has such problems that its molecule size is smaller than that of dichlorodifluoromethane and its ability to penetrate or permeate a gasket is high.

On the other hand, speaking of the gasket, the above inorganic or organic fibers substituted for asbestos have larger fiber diameters than asbestos, and this is disadvantageous for forming a delicate structure. Therefore, it is impossible to obtain sealing properties which are sufficiently satisfactory for use as a gasket for a compressor of a refrigerating machine or the like.

That is to say, when a conventional refrigerant/refrigerating machine oil combination, a representative of which is a dichlorodifluoromethane/mineral oil combination, is replaced by a combination of HFC134a/refrigerating machine oil selected from the synthetic lubricating oils of the PAG type, the ester-modified PAG type and the ester type, the conventional gasket based on the non-asbestos sheet lacks the durability which is required for a gasket for a refrigerating machine and also becomes insufficient in sealing properties because a bonding agent portion such as the above-mentioned NBR or the like usually used is corroded. In addition, sulfur and peroxide which are the unreacted vulcanizing agents contained in the above non-asbestos sheet are dissolved in the refrigerating machine oil to oxidatively deteriorate the refrigerating machine oil. As a result, the lubricity is deteriorated; the metal portion is sometimes corroded with the fatty acid produced by decomposition; and furthermore precipitates are generated, whereby the performance of the compressor may become greatly damaged.

The present invention has been made for the purpose of providing a gasket for a compressor, especially for a compressor of a refrigerating machine, which gasket has solved the above-mentioned problems of the prior art; does not use the asbestos; is used in said compressor in which a fluorocarbon refrigerant and a refrigerating machine oil selected from synthetic lubricating oils of the polyalkylene glycol type, the ester-modified PAG type in which at least one terminal of the polyalkylene glycol has been modified by esterification and the ester type; sufficiently keeps the airtightness in each section of the compressor; is excellent in strength and durability; and does not generate precipitates.

### Disclosure of the Invention

The gasket for a compressor, especially for a compressor of a refrigerating machine, adopted by the present invention for achieving the above object is characterized by being composed of at least an inorganic filler other than asbestos, a polycarbodiimide resin and a rubber material having a functional group having a reactivity with the carbodiimide group of the polycarbodiimide resin and optionally an organic or inorganic fiber. The gasket has a particular shape so that it can keep the airtightness of each compressor section when used in a compressor of a refrigerating machine in which a fluorocarbon refrigerant and a refrigerating machine oil selected from synthetic lubricating oils of the polyalkylene glycol type, the ester-modified polyalkylene glycol type and the ester type are used.

### Brief Description of Drawing

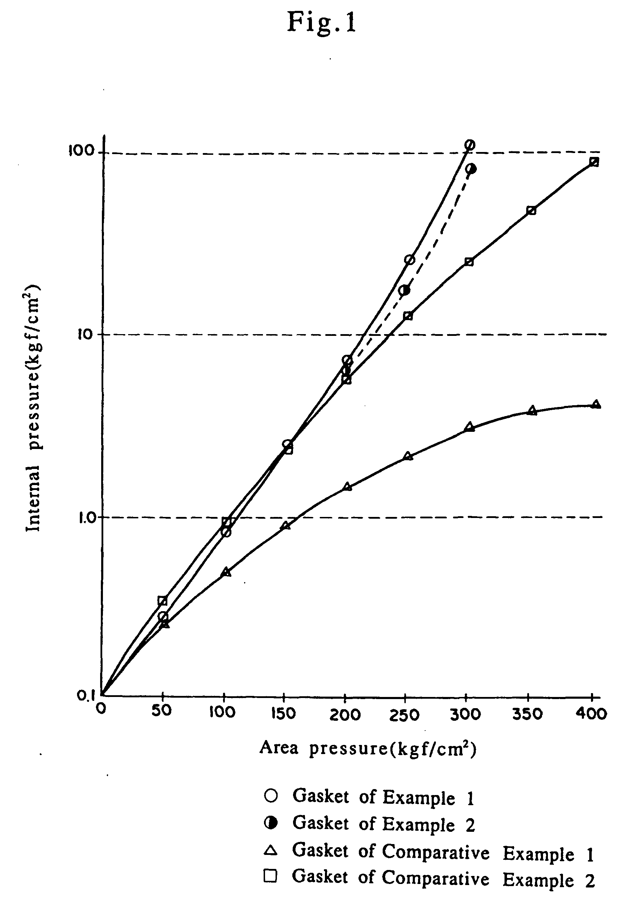

Fig. 1 is a graph showing the results of the sealing properties test conducted on the gaskets of Examples 1 and 2 and Comparative Examples 1 and 2.

### Best Mode for Carrying out the Invention

First of all, the inorganic filler used in the present gasket for a compressor, especially for a compressor of a refrigerating machine, may be any inorganic filler other than asbestos and is not critical. Specific examples thereof are fibers such as glass fiber and the like; powdery, scaly or whisker-like materials of clay, talc, barium sulfate, mica, vermiculite, calcium carbonate, silica, wollastonite, magnesium sulfate, potassium titanate, carbon black and the like; and appropriate mixtures thereof.

The polycarbodiimide resin used in the present invention is a known one or one which can be produced in the same manner as in the known one {see US Patent No. 2,941,956; Japanese Patent Publication No. 33279/72; J.Org.Chem., 28 2069-2075 (1963); Chemical Review 1981, vol. 81, No. 4, 619-621; and the like}, and can be easily produced, for example, by condensation reaction of an organic diisocyanate accompanied by decarboxylation in the presence of a carbodiimidization catalyst.

The organic diisocyanate used in the above production of the polycarbodiimide resin may be any of the aliphatic, alicyclic, aromatic and aromatic-aliphatic types, and these may be used alone or as a copolymer of two or more of them.

The polycarbodiimide resin used in the present invention includes homopolymers and copolymers containing at least one repeating unit represented by the following formula:

-R-N=C=N-

wherein R represents an organic diisocyanate residue.

As R in the above formula which is the organic diisocyanate residue, an aromatic diisocyanate residue is particularly preferable wherein the organic diisocyanate residue means the residual portion formed by removing two isocyanate groups (NCO) from one organic diisocyanate molecule. As specific examples of such an organic diisocyanate, there can be mentioned those represented by the formula (1): 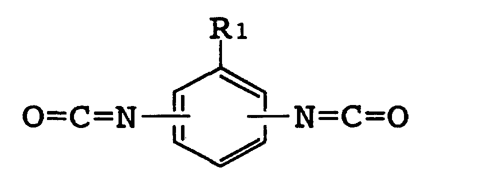 wherein R₁ represents a hydrogen atom, a lower alkyl group or a lower alkoxy group; the formula (2): 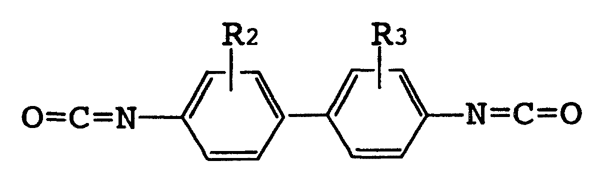 wherein R₂ and R₃ represent hydrogen atoms, lower alkyl groups or lower alkoxy groups; and the formula (3): 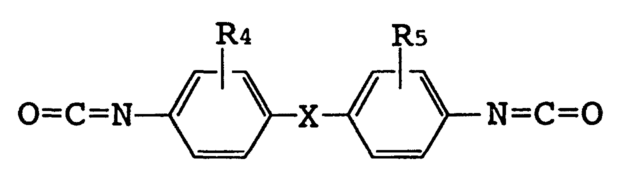 wherein R₄ and R₅ represent hydrogen atoms, lower alkyl groups or lower alkoxy groups and X represents an oxygen atom or a methylene group.

Explaining the substituents in the above formulas, R₁, R₂ and R₃ represent lower alkyl groups, representatives of which are methyl groups, ethyl groups, propyl groups and butyl groups or corresponding lower alkoxy groups; R₄ and R₅ represent hydrogen atoms and the same lower alkyl and lower alkoxy groups as for R₁ to R₃, and X represents an oxygen atom or a methylene group.

Specifically, the organic diisocyanate represented by the above formula (1) includes tolylene diisocyanates such as 2,4-tolylene diisocyanate, 2,6-tolylene diisocyanate, a mixture of 2,4-tolylene diisocyanate and 2,6-tolylene diisocyanate and the like; 1-methoxyphenyl-2,4-diisocyanate; and the like. The organic diisocyanate represented by the above formula (2) includes o-tolidine diisocyanate and the like. The organic diisocyanate represented by the above formula (3) includes 4,4'-diphenylmethane diisocyanate, 4,4'-diphenylether diisocyanate, 3,3'-dimethyl-4,4'-diphenylether diisocyanate and the like. These diisocyanates can be used alone or in admixture of two or more.

The reaction for converting the above organic diisocyanate into a polycarbodiimide resin is effected in the presence of a carbodiimidization catalyst, and as this carbodiimidization catalyst, there can be mentioned phospholene oxides, for example, 3-methyl-1-phenyl-2-phospholene-1-oxide and the like.

The shape of the polycarbodiimide resin used in the present invention includes pulp shape and powder shape, and in order to produce a polycarbodiimide resin pulp from, for example, one of the organic diisocyanates represented by the above formulas (1) to (3), first of all, a dope of the polycarbodiimide resin is obtained by subjecting the organic diisocyanate to polymerization reaction using an alicyclic ether as a solvent in the presence of a carbodiimidization catalyst.

In the case of the above-mentioned organic diisocyanate, the reaction is effected in an alicyclic ether, and this alicyclic ether is preferably one which is liquid at room temperature and has two or less ether linkages in the molecule. Specifically, tetrahydrofuran, dioxane, tetrahydropyran and mixed solvents thereof can be mentioned as examples. Among them, tetrahydrofuran is preferred.

When the above-mentioned kinds of organic diisocyanates are used, the reaction is effected at a monomer concentration of 30% by weight or less, preferably 20% by weight or less. When the monomer concentration becomes 30% by weight or more, the resin forms powder or pulp whose fibers are thick and hard, so that said concentration is not desirable. Moreover, since it follows that many isocyanate groups are present in the resulting pulp and powder, foaming is caused in molding or the like, which is not desirable. Furthermore, even in an aspect of heat resistance which is the characteristic feature of the polycarbodiimide pulp, it follows that the preferable properties are greatly deteriorated because the foaming is caused at a temperature of at least 200°C. In order to avoid such problems, it is advantageous to adjust the NCO content in the dope to 3% or less, preferably 2% or less.

As an alternative method, there is a method of end-blocking. As an end-blocking agent, there can be mentioned monoisocyanate, thiophenol, phenol, aniline, benzoic acid, those having introduced thereinto a substituent, and the like. The above-mentioned substituent includes lower alkyl groups, lower alkoxy group, lower unsaturated alkyl groups and the like (those mentioned here are of the aromatic type; however, those of the aliphatic type can, of course, be used depending upon the required degree of heat resistance or the like).

In addition to the above, the end-blocking agent may be one derived from an isocyanate-terminated compound which can be easily produced by reaction of about 1 mole of a compound having an -OH, -NH₂, -COOH, -SH or -NH-alkyl terminal group with 2 moles of an aromatic diisocyanate.

In the synthesis of a pulp of a polycarbodiimide resin as mentioned above, the molecular weight thereof is preferably at least 2,000.

The polycarbodiimide resin pulp used in the present invention is obtained, as stated in Japanese Patent Application Kokai (Laid-Open) No. 195,483/1993, by contacting the dope produced as mentioned above and a coagulating solution with each other by, for example, discharging the two through a nozzle, and the resulting dope is endowed with excellent dispersibility in the coagulating solution and releasability of solvent. Therefore, when the dope is subjected to such an operation, the polycarbodiimide polymer in the dope is made into pulp just after the dope is contacted with the coagulating solution.

The polycarbodiimide resin pulp thus obtained has the above-mentioned repeating units and has a heat-decomposition temperature as high as 450°C or more. Incidentally, the polycarbodiimide resin pulp used in the present invention may be one having "substantially" the repeating units represented by the above-mentioned formulas, and, for example, may have partly a branching structure. Also, the above-mentioned polycarbodiimide resin pulps may be used alone or in combination of two or more.

On the other hand, the powdery polycarbodiimide used in the present invention can be obtained by, for example, the method stated in Japanese Patent Application Kokai (Laid-Open) No. 239,223/1993 which comprises spraying and drying a polycarbodiimide resin solution, or the method stated in D.J. Lyman, Die Makromol. Chem., 67, 1 (1963) which comprises effecting the reaction in a general solvent and collecting the powdery products precipitated.

The rubber material used in the present invention is one having a functional group having a reactivity with the carbodiimide group of the above-mentioned polycarbodiimide resin, and as the "functional group having a reactivity with the carbodiimide group" referred to here, there can be mentioned the functional groups stated in Frederic Kurzer, et al., Advances in The Chemistry of Carbodiimide, Vol. 67 (2), 1967, and among them, there can be mentioned, as preferable examples, one or more of carboxyl group, phenolic hydroxyl group, alcoholic hydroxyl group, primary or secondary amino group, epoxy group, thiol group, and two carboxyl groups which have been dehydration-bonded as a carboxylic anhydride group.

As the rubber material having a functional group as mentioned above, there can be mentioned chemically synthesizable ones of the acrylic type, the acrylonitrile-butadiene type, the hydrogenated acrylonitrile-butadiene type and the like.

Moreover, the above rubber material is preferably used in the form of an emulsion or latex, and specifically, at least one member of the carboxy-modified acrylonitrile-butadiene rubber latex, acrylic rubber emulsion and the like produced in industry can be mentioned as preferable ones.

The characteristic feature of the present invention lies in reacting at least partly the above polycarbodiimide resin with the rubber material having a functional group having a reactivity with the carbodiimide group of said polycarbodiimide resin. That is, when the rubber material is in the form of an emulsion or latex, in the production of a sheet, a mixture system of a solid polycarbodiimide resin and said emulsion or latex is formed and, in addition, the temperature is room temperature, so that substantially no reaction takes place and the mixture system can be made into a sheet. When this sheet is heat-molded at a temperature not lower than the softening point of the polycarbodiimide resin, the polycarbodiimide resin and the rubber material having a functional group having a reactivity with the carbodiimide group are reacted with each other.

Incidentally, when it is intended to knead the polycarbodiimide resin with a raw rubber having a functional group having a reactivity with the carbodiimide group and then use the resulting mixture, a reaction is allowed to proceed by the heat generated during the kneading, the moldability is lost thereby and, in some cases, the mixture cannot be used as a stock for the sheet material. Therefore, when the kneading is effected, it is necessary to conduct the kneading with cooling. For example, the kneading is preferably conducted with cooling so that the temperature during the kneading becomes 40°C or less, preferably 30°C or less.

As an alternative method, there can be adopted a method which comprises coating the surface of the polycarbodiimide resin with a material inert to the above rubber (encapsulation), kneading the coated polycarbodiimide resin and the rubber, making the kneading mixture into a sheet and thereafter applying heat and pressure to the sheet to allow the reaction to proceed.

In addition, in the composition produced by reacting the polycarbodiimide resin with the rubber material, the water resistance in which the emulsion or latex has been inferior is improved and simultaneously the heat resistance and chemical resistance of the rubber material are improved. Moreover, since it follows that the polycarbodiimide resin is used as a cross-linking agent for the rubber material, it is unnecessary to use a vulcanizing (cross-linking) agent such as sulfur, peroxide or the like which causes metal corrosion, and the extension of the rubber material which has heretofore been difficulties made possible without causing softening and metal corrosion, whereby the production of a gasket excellent in heat resistance and chemical resistance, used for a compressor of a refrigerating machine or the like has been made possible.

In the present gasket having the above-mentioned characteristic features for a compressor of a refrigerating machine or the like, the polycarbodiimide resin and the rubber material, when the functional group having a reactivity with the carbodiimide group is, for example, a carboxyl group, form a structure as shown by the following formula by addition reaction: 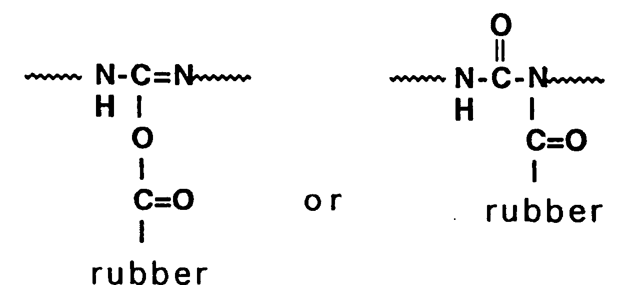 (as functional groups also causing addition reaction, there can be mentioned phenolic hydroxyl group, alcoholic hydroxyl group, amino group and thiol group). Also, when the functional group having a reactivity with the above carbodiimide group is composed of two carboxyl groups dehydration-bonded as an acid anhydride, the polycarbodiimide resin and the rubber material form a structure as shown by the following formula: 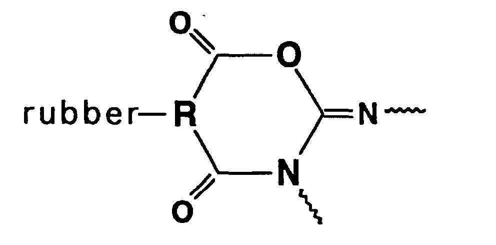 (as functional groups also causing cyclization reaction, epoxy group can be mentioned).

Incidentally, in the present invention, in addition to the above-mentioned components, if necessary, an appropriate fiber component may be added, and this fiber component includes organic fibers and inorganic fibers. Specifically, polyamide fiber, aramid fiber, glass fiber, carbon fiber, polyester fiber, polyacrylonitrile fiber, pulps thereof, celluloses (cotton, hemp, pulp and the like) and the like can be mentioned. Among them, aramid fiber, its pulp, glass fiber and carbon fiber are preferred.

Moreover, in the present invention, in addition to the above component, if necessary, rubber materials which do not have the functional group having a reactivity with the carbodiimide group can be added in such a range that the gasket obtained is not adversely affected. As such rubber materials, there can be mentioned nitrile rubber, styrene-butadiene rubber, isoprene rubber, chloroprene rubber, butadiene rubber, butyl rubber, ethylene-propylene rubber, ethylene-vinyl acetate rubber, chlorinated polyethylene rubber, epichlorohydrin rubber, nitrile-isoprene rubber, fluororubber, silicone rubber, natural rubber and latexes of them.

The proportion of each of the components described above may be appropriately determined depending upon the purpose of use, conditions and the like; however, for example, the following ranges can be mentioned:

| | |
|---|---|
| Inorganic fillers other than asbestos | 30-90% by wt. |
| Rubber material | 5-50% by wt. |
| Polycarbodiimide resin | 1-50% by wt. |
| Fiber component | 0-50% by wt. |
| Rubber material which does not have functional group having a reactivity with the carbodiimide group | 0-30% by wt. |

Incidentally, for some uses, it is better to use the polycarbodiimide resin in an amount equal to or smaller than that of the rubber material having a functional group having a reactivity with the carbodiimide group, and it is not objectionable to co-use an appropriate amount of a known vulcanizing (cross-linking) agent for rubber material.

The present gasket for a compressor, especially for a compressor of a refrigerating machine, characterized as mentioned above can be obtained by making the inorganic filler other than asbestos, the polycarbodiimide resin, the rubber material having a functional group having a reactivity with the carbodiimide group of the polycarbodiimide resin and the optionally added organic or inorganic fiber into a sheet, thereafter heating the sheet at a temperature not lower than the softening point of the above polycarbodiimide resin and molding the same into a required shape.

The mixing of each component, the making of the mixture into a sheet and the molding of the sheet can all be conducted by utilizing known means. For example, the making of the mixture into a sheet can be conducted by a beater method, and the molding of the sheet can be conducted by a press-molding method or a roll-molding method. As the heating temperature, such numerical values as 150°C or higher and 300°C or lower can be shown. Incidentally, the sheet obtained can be laminated when heated.

The present invention is explained in more detail below by Examples.

### Example 1

### (1) Production of polycarbodiimide resin pulp

A four-necked flask was equipped with a Dimroth condenser, a thermometer and a mechanical stirrer and thereafter 4,000 ml of tetrahydrofuran was fed thereto from the material-introducing opening. Subsequently, 650 g of MDI (4,4'-diphenylmethane diisocyanate) which was the starting material was added and further 3-methyl-1-phenyl-2-phospholene-1-oxide was added in a proportion of 0.2% by weight based on the starting isocyanate, after which they were subjected to reaction under reflux for 7 hours to obtain a dope of polycarbodiimide. In this case, the monomer concentration was 15.5% and the NCO content was 1.0%.

The dope produced as mentioned above was introduced into an autoclave and one end of the autoclave was connected to a nozzle and the other to a compressor. The dope was discharged by a back pressure. As the nozzle, a two fluid nozzle (manufactured by Spraying System Co.) was used. Using this apparatus, the dope and a coagulating agent were discharged onto a coagulating bath while the back pressure was controlled so that the dope-discharging rate became 10 ml/min and the coagulating agent-discharging rate became 1,010 ml/min, to form a pulp. This was filtered and dried to obtain an objective pulp. Incidentally, even when the coagulating bath was not used, the objective pulp was obtained.

### (2) Production of gasket

| | |
|---|---|
| Polycarbodiimide resin pulp | 15% by wt. |
| Rubber material (carboxy-modified NBR latex [solid content]) | 23% by wt. |
| Aramid pulp (fiber component) | 10% by wt. |
| Inorganic filler | 52% by wt. |

A composition having the above formulation was mixed and made into a sheet-shaped material. Subsequently, this sheet-shaped material was molded at 200°C at 200Kg/cm² for 10 minutes to obtain a sheet having a thickness of 0.5 mm. The sheet obtained was punched in a size of φ32 x φ48 mm to produce an example of the present gasket.

### Example 2

### (1) Production of polycarbodiimide resin powder

In 2,458 g of tetrachloroethylene, 675 g of MDI (4,4'-diphenylmethane diisocyanate) and 71.4 g of phenylisocyanate were reacted together with 1.5 g of a carbodiimidization catalyst (3-methyl-1-phenyl-2-phospholene-1-oxide) at 120°C for 4 hours to obtain a pale yellow, transparent polycarbodiimide solution (resin concentration: 20%). This solution was cooled to 40°C in 12 hours to obtain a polycarbodiimide of slurry form having a viscosity of 270 cP. This polycarbodiimide slurry was spray-dried under such conditions that the drying temperature was 60°C, the air pressure was 2 Kg/cm² and the slurry feeding rate was 1 liter/hour to obtain a pale yellow powder.

### (2) Production of gasket

| | |
|---|---|
| Polycarbodiimide resin powder | 15% by wt. |
| Rubber material (carboxy-modified NBR | |
| latex [solid content]) | 20% by wt. |
| Aramid pulp (fiber component) | 10% by wt. |
| Inorganic filler | 55% by wt. |

A composition having the above formulation was mixed and made into a sheet-shaped material. Subsequently, this sheet-shaped material was molded at 180°C at 200 Kg/cm² for 10 minutes to obtain a sheet having a thickness of 0.5 mm. The sheet obtained was punched in a size of φ32 x φ48 mm to produce an example of the present gasket.

### Comparative Examples 1 and 2

As gaskets, a commercially available asbestos joint sheet for a refrigerating machine (Comparative Example 1) and a non-asbestos joint sheet for a refrigerating machine (Comparative Example 2) were procured and gaskets having the same size as in Examples 1 and 2 were produced therefrom.

### Comparative Tests

### 1.Sealing properties

Each of the gaskets of Examples 1 and 2 and Comparative Examples 1 and 2 was sandwiched in between flange surfaces having a surface roughness Rmax of 1.6 and the flanges were cramped so that the area pressure became 9.8 MPa, after which the internal pressure was increased by a nitrogen gas. The internal pressure at which bubbles were generated in an aqueous soap solution applied on the circumference of the gasket was taken as leak pressure, based on which the sealing properties were evaluated. The results are shown in Fig. 1.

### 2.Measurement of tear strength after heat treatment

The gaskets of Examples 1 and 2 and Comparative Examples 1 and 2 were subjected to a tear strength test after the heat treatment at 200°C for 100 hours according to JIS K6301. The results obtained are shown in Table 1.

**Table 1**

| Measurement sample | Tear strength (kgf/cm) |
|---|---|
| Example 1 | 80 |
| Example 2 | 78 |
| Comparative Example | 70 |
| Comparative Example 2 | 10 |

Incidentally, the tear strength before the heat treatment was 60 kgf/cm in all of Examples 1 and 2 and Comparative Examples 1 and 2.

### 3.Actual compressor test

Each of the gaskets of Examples 1 and 2 and Comparative Examples 1 and 2 was set into a compressor of a refrigerating machine in which HFC134a was used as a refrigerant and a synthetic lubricating oil of the ester type was used as a refrigerating machine oil and the refrigerating machine was subjected to actual compressor operation for three months.

After completion of the actual compressor operation, the deterioration of the refrigerating machine oil was evaluated based on the total oxidation number and the presence or absence of precipitate. The results obtained are shown in Table 2.

**Table 2**

| | Resistance to HFC134a/ester type refrigerating machine oil | | | Collective evaluation |
|---|---|---|---|---|
| Sample species | Total oxidation number (B/A)* | Precipitate | Strength retention | |
| Example 1 | 1.0 | None | ○ | ○ |
| Example 2 | 1.0 | None | ○ | ○ |
| Comp. Ex. 1 | 1.2 | Very | ○ | Δ |
| Comp. Ex. 2 | 28 | Slight | × | × |

| | | | | |
|---|---|---|---|---|
| Note: A: Total oxidation number (mg KOH/g) of ester oil before test B: Total oxidation number (mg KOH/g) of ester oil after test | | | | |

### Example 3

| | |
|---|---|
| Polycarbodiimide resin powder produced in Example 2 | 10% by wt. |
| Rubber material (carboxy-modified NBR latex [solid content]) | 15% by wt. |
| Aramid pulp (fiber component) | 12% by wt. |
| Inorganic filler | 63% by wt. |

A composition having the above formulation was mixed and made into a sheet-shaped material. Subsequently, this sheet-shaped material was passed two times through a twin roll at 220°C at a line pressure of 300Kg/cm to obtain a sheet having a thickness of 0.8 mm. The sheet obtained was punched in a size of φ32 x φ48 mm to produce an example of the present gasket.

### Example 4

### (1) Production of polycarbodiimide resin powder

In 3,840 g of tetrachloroethylene, 600 g of MDI (4,4'-diphenylmethane diisocyanate) and 23.8 g of phenylisocyanate were reacted together with 1.0 g of a carbodiimidization catalyst (3-methyl-1-phenyl-2-phospholene-1-oxide) at 120°C for 4.5 hours. The reaction mixture was cooled to room temperature to produce precipitates. The precipitates were filtered and dried to obtain a polycarbodiimide resin powder.

### (2) Production of gasket

| | |
|---|---|
| Polycarbodiimide resin powder | 5% by wt. |
| Rubber material (carboxy-modified NBR latex [solid content]) | 15% by wt. |
| Aramid pulp (fiber component) | 10% by wt. |
| Carbon fiber (fiber component) | 3% by wt. |
| Inorganic filler | 67% by wt. |

A composition having the above formulation was mixed and made into a sheet-shaped material. Subsequently, this sheet-shaped material was molded at 200°C at 200Kg/cm² for 10 minutes to obtain a sheet having a thickness of 0.5 mm. The sheet obtained was punched in a size of φ32 x φ48 mm to produce an example of the present gasket.

### Example 5

| | |
|---|---|
| Polycarbodiimide resin pulp produced in Example 1 | 30% by wt. |
| Rubber material (carboxy-modified NBR latex [solid content]) | 30% by wt. |
| Aramid pulp (fiber component) | 15% by wt. |
| Inorganic filler | 25% by wt. |

A composition having the above formulation was mixed and made into a sheet-shaped material. Subsequently, this sheet-shaped material was passed two times through a twin roll at 220°C at a line pressure of 300Kg/cm to obtain a sheet having a thickness of 0.8 mm. The sheet obtained was punched in a size of φ32 x φ48 mm to produce an example of the present gasket.

### Example 6

| | |
|---|---|
| Polycarbodiimide resin pulp produced in Example 1 | 15% by wt. |
| Polycarbodiimide resin powder produced in Example 4 | 5% by wt. |
| Rubber material (carboxy-modified NBR latex [solid content]) | 10% by wt. |
| Aramid pulp (fiber component) | 3% by wt. |
| Carbon fiber (fiber component) | 3% by wt. |
| Glass fiber (fiber component) | 2% by wt. |
| Inorganic filler | 62% by wt. |

A composition having the above formulation was mixed and made into a sheet-shaped material. Subsequently, this sheet-shaped material was passed two times through a twin roll at 220°C at a line pressure of 300Kg/cm to obtain a sheet having a thickness of 0.8 mm. The sheet obtained was punched in a size of φ32 x φ48 mm to produce an example of the present gasket.

### Example 7

| | |
|---|---|
| Polycarbodiimide resin pulp produced in Example 1 | 5% by wt. |
| Polycarbodiimide resin powder produced in Example 2 | 3% by wt. |
| Rubber material (carboxy-modified NBR latex [solid content]) | 10% by wt. |
| Rubber material (carboxy-modified acrylic rubber emulsion [solid content]) | 3% by wt. |
| Aramid pulp (fiber component) | 12% by wt. |
| Carbon fiber (fiber component) | 1% by wt. |
| Inorganic filler | 77% by wt. |

A composition having the above formulation was mixed and made into a sheet-shaped material. Subsequently, this sheet-shaped material was passed two times through a twin roll at 220°C at a line pressure of 300Kg/cm to obtain a sheet having a thickness of 0.8 mm. The sheet obtained was punched in a size of φ32 x φ48 mm to produce an example of the present gasket.

### Example 8

| | |
|---|---|
| Polycarbodiimide resin pulp produced in Example 1 | 17% by wt. |
| Rubber material (carboxy-modified NBR latex [solid content]) | 16% by wt. |
| Rubber material (hydrogenated NBR latex [solid content]) | 7% by wt. |
| Aramid pulp (fiber component) | 11% by wt. |
| Inorganic filler | 49% by wt. |

A composition having the above formulation was mixed and made into a sheet-shaped material. Subsequently, this sheet-shaped material was passed three times through a twin roll at 220°C at a line pressure of 250Kg/cm to obtain a sheet having a thickness of 0.5 mm. The sheet obtained was punched in a size of φ32 x φ48 mm to produce an example of the present gasket.

### Comparative Tests

### 1.Tensile strength and sealing properties

The gaskets of Examples 3 to 8 and Comparative Example 2 were subjected to measurement of tensile strength. Thereafter, each of these gaskets was inserted between the flange surfaces which were then cramped at an area pressure of 100 Kg/cm² and thereafter the outlet side of the flange was sealed, after which a nitrogen gas was introduced from the inlet side to elevate the internal pressure. The nitrogen gas pressure at which the rate of the nitrogen gas leaked from the flange reached 5ml/min was taken as the value showing the sealing properties. The results obtained are shown in Table 3.

**Table 3**

| | Tensile strength (kg/cm²) | Sealing properties (kg/cm²) |
|---|---|---|
| Example 3 | 250 | 10 |
| Example 4 | 250 | 10 |
| Example 5 | 280 | 14 |
| Example 6 | 230 | 12 |
| Example 7 | 230 | 10 |
| Example 8 | 250 | 12 |
| Comp. Ex. 2 | 180 | 3 |

### 2.Actual compressor test

Each of the gaskets of Examples 3 to 8 was set into a compressor of a refrigerating machine in which HFC134a was used as a refrigerant and a synthetic lubricating oil of the ester type was used as a refrigerating machine oil, and the refrigerating machine was subjected to a 3-month actual compressor operation. After completion of the actual compressor operation, the deterioration of the refrigerating machine oil was evaluated based on the total oxidation number and the presence or absence of precipitate. The results obtained are shown in Table 4.

**Table 4**

| | Resistance to HFC134a/ester type refrigerating machine oil | | | Collective evaluation |
|---|---|---|---|---|
| Sample species | Total oxidation number (B/A)* | Precipitate | Strength retention | |
| Example 3 | 1.0 | None | ○ | ○ |
| Example 4 | 1.0 | None | ○ | ○ |
| Example 5 | 1.0 | None | ○ | ○ |
| Example 6 | 1.0 | None | ○ | ○ |
| Example 7 | 1.0 | None | ○ | ○ |
| Example 8 | 1.0 | None | ○ | ○ |

| | | | | |
|---|---|---|---|---|
| Note: A: Total oxidation number (mg KOH/g) of ester oil before test B: Total oxidation number (mg KOH/g) of ester oil after test | | | | |

### Industrial Applicability

When the present gasket for a compressor of a refrigerating machine of the like is produced as mentioned above,
1) resistance to a fluorocarbon refrigerant and a refrigerating machine oil of the polyalkylene glycol type or the like used together with the refrigerant can be imparted to the gasket,
2) since the gasket is produced at a temperature not lower than the softening point of a polycarbodiimide resin, the voids between fibers which have been a problem to be solved in the conventional gaskets are filled with the polycarbodiimide resin, and the sealing properties are enhanced, and
3) since the gasket is produced at a temperature not lower than the softening point of the polycarbodiimide resin, the polycarbodiimide resin increases the bonding strength between the fiber component and the inorganic filler, so that a sufficient strength is obtained without using a vulcanizing agent, that is, the deterioration of the refrigerating machine oil is diminished, no metal corrosion is caused and the durability of the compressor can be increased.

## Claims

1. A gasket for a compressor, especially for a compressor of a refrigerating machine, **characterized by** being composed of at least an inorganic filler other than asbestos, a polycarbodiimide resin, a rubber material having a functional group having a reactivity with a carbodiimide group of the polycarbodiimide resin, and optionally an organic or inorganic fiber.

2. The gasket for a compressor according to claim 1, wherein the polycarbodiimide resin and the rubber material having a functional group having a reactivity with the carbodiimide group of the polycarbodiimide resin are at least partially reacted.

3. The gasket for a compressor according to claim 1 or 2, wherein the polycarbodiimide resin is one obtained by polymerizing an organic diisocyanate represented by the formula (1): 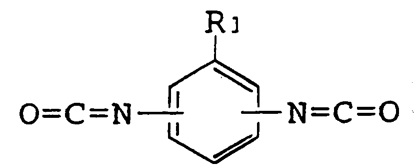 wherein R₁ represents a hydrogen atom a methyl, ethyl, propyl or butyl group or the corresponding alkoxy group, the formula (2): 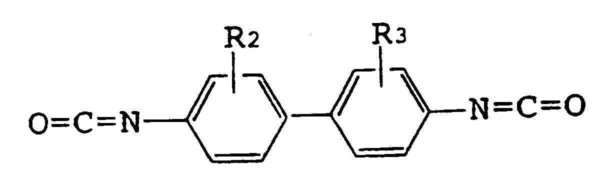 wherein R₂ and R₃ represent hydrogen atoms, methyl, ethyl, propyl or butyl groups or the corresponding alkoxy groups, or the formula (3): 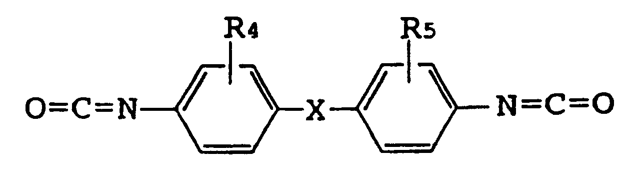 wherein R₄ and R₅ represent hydrogen atoms, methyl, ethyl, propyl or butyl groups or the corresponding alkoxy groups and X represents an oxygen atom or a methylene group, in the presence of a carbodiimidization catalyst.

4. The gasket for a compressor according to claim 1 or 2, wherein the rubber material is of the acrylic type, the acrylonitrile-butadiene type or the hydrogenated acrylonitrile-butadiene type.

5. The gasket for a compressor according to claim 4, wherein the rubber material is used in the form of an emulsion or latex.

6. The gasket for a compressor according to claim 1, wherein the optional fiber component is a polyamide fiber, an aramid fiber, a carbon fiber, a polyester fiber, a polyacrylonitrile fiber, a cellulose fiber, a glass fiber, rock wool or a ceramic fiber.

7. The gasket for a compressor according to claim 1, which comprises 30 to 90% by weight of the inorganic filler other than asbestos, 5 to 50 % by weight of the rubber material, 1 to 50 % by weight of the polycarbodiimide resin and 0 to 50 % by weight of the fiber component.

## Patentansprüche

1. Dichtung für einen Kompressor, insbesondere für einen Kompressor einer Kältemaschine, **dadurch gekennzeichnet, dass** diese aus mindestens einem von Asbest verschiedenen anorganischen Füllstoff, einem Polycarbodiimidharz, einem Kautschukmaterial mit einer funktionellen Gruppe mit einer Reaktivität mit einer Carbodiimidgruppe des Polycarbodiimidharzes und wahlweise einer organischen oder anorganischen Faser aufgebaut ist.

2. Dichtung für einen Kompressor nach Anspruch 1, wobei das Polycarbodiimidharz und das Kautschukmaterial mit einer funktionellen Gruppe mit einer Reaktivität mit der Carbodiimidgruppe des Polycarbodiimidharzes zumindest teilweise umgesetzt werden.

3. Dichtung für einen Kompressor nach Anspruch 1 oder 2, wobei das Polycarbodiimidharz eines ist, dass durch Polymerisieren eines organischen Diisocyanats der Formel (1): 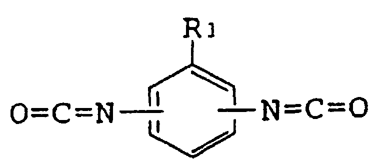 worin R₁ ein Wasserstoffatom, eine Methyl-, Ethyl-, Propyl- oder Butylgruppe oder die entsprechende Alkoxygruppe repräsentiert, der Formel (2): 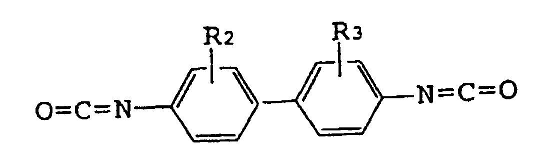 worin R₂ und R₃ Wasserstoffatome, Methyl-, Ethyl-, Propyl- oder Butylgruppen oder die entsprechenden Alkoxygruppen repräsentieren, oder der Formel (3): 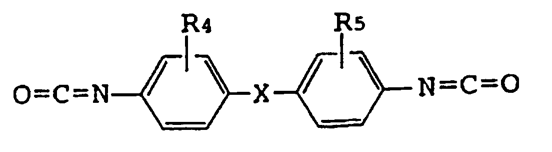 worin R₄ und R₅ Wasserstoffatome, Methyl-, Ethyl-, Propyl- oder Butylgruppen oder die entsprechenden Alkoxygruppen repräsentieren und X für ein Sauerstoffatom oder eine Methylengruppe steht, in Gegenwart eines Carbodiimidisierungskatalysators erhalten wird.

4. Dichtung für einen Kompressor nach Anspruch 1 oder 2, wobei das Kautschukmaterial vom Acryl-Typ, Acrylnitril-Butadien-Typ oder hydrierten Acrylnitril-Butadien-Typ ist.

5. Dichtung für einen Kompressor nach Anspruch 4, wobei das Kautschukmaterial in der Form von einer Emulsion oder von Latex verwendet wird.

6. Dichtung für einen Kompressor nach Anspruch 1, wobei die optionale Faserkomponente eine Polyamidfaser, eine Aramidfaser, eine Kohlenstofffaser, eine Polyesterfaser, eine Polyacrylnitrilfaser, eine Cellulosefaser, eine Glasfaser, Steinwolle oder eine Keramikfaser ist.

7. Dichtung für einen Kompressor nach Anspruch 1, welche 30 bis 90 Gew.-% des von Asbest verschiedenen anorganischen Füllstoffs, 5 bis 50 Gew.-% des Kautschukmaterials, 1 bis 50 Gew.-% des Polycarbodiimidharzes und 0 bis 50 Gew.-% der Faserkomponente umfasst.

## Revendications

1. Joint d'étanchéité pour un compresseur, en particulier pour un compresseur d'une machine réfrigérante, **caractérisé en ce qu'**il se compose d'au moins une charge inorganique autre que l'amiante, d'une résine de polycarbodiimide, d'un matériau de caoutchouc ayant un groupe fonctionnel ayant une réactivité avec un groupe carbodiimide de la résine de polycarbodiimide et facultativement d'une fibre organique ou inorganique.

2. Joint d'étanchéité pour un compresseur selon la revendication 1, où la résine de carbodiimide et le matériau de caoutchouc ayant un groupe fonctionnel ayant une réactivité avec le groupe carbodiimide de la résine de polycarbodiimide sont au moins partiellement mis à réagir.

3. Joint d'étanchéité pour un compresseur selon la revendication 1 ou 2, où la résine de polycarbodiimide en est une obtenue par polymérisation d'un diisocyanate organique représenté par la formule (1): 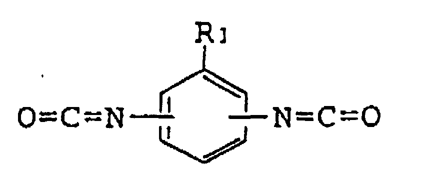 où R₁ représente un atome d'hydrogène, un groupe méthyle, éthyle, propyle ou butyle ou le groupe alcoxy correspondant, la formule (2) 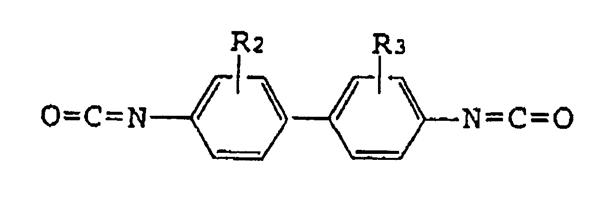 où R₂ et R₃ représentent des atomes d'hydrogène, des groupes méthyle, éthyle, propyle ou butyle ou les groupes alcoxy correspondants; ou la formule (3) : 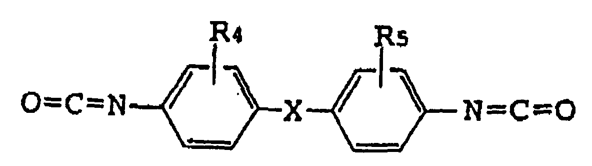 où R₄ et R₅ représentent des atomes d'hydrogène, des groupes méthyle, éthyle, propyle ou butyle ou les groupes alcoxy correspondants et X représente un atome d'oxygène ou un groupe méthylène, en présence d'un catalyseur de carbodiimidisation.

4. Joint d'étanchéité pour un compresseur selon la revendication 1 ou 2, où le matériau de caoutchouc est du type acrylique, du type acrylonitrile-butadiène ou du type acrylonitrile-butadiène hydrogéné.

5. Joint d'étanchéité pour un compresseur selon la revendication 4, où le matériau de caoutchouc est utilisé sous la forme d'une émulsion ou d'un latex.

6. Joint d'étanchéité pour un compresseur selon la revendication 1, où le composant facultatif de fibre est une fibre de polyamide, une fibre aramide, une fibre de carbone, une fibre de polyester, une fibre de polyacrylonitrile, une fibre de cellulose, une fibre de verre, une laine minérale ou une fibre céramique.

7. Joint d'étanchéité pour un compresseur selon la revendication 1 qui comprend 30 à 90% en poids de la charge inorganique autre que l'amiante, 5 à 50% en poids du matériau de caoutchouc, 1 à 50% en poids de la résine de polycarbodiimide et 0 à 50% en poids du composant de fibre.
